Europäisches Patentamt

European Patent Office

Office européen des brevets

(19)

(11) Numéro de publication: **0 004 816**
**B2**

(12)

# NOUVEAU FASCICULE DE BREVET EUROPEEN

(45) Date de publication du nouveau fascicule du brevet:
**20.03.85**

(21) Numéro de dépôt: **79400211.3**

(22) Date de dépôt: **02.04.79**

(51) Int. Cl.⁴: **C 03 C 25/02**, C 08 J 5/24,
D 06 M 15/00

(54) Procédé d'ensimage, fibres de verre obtenues et leur utilisation pour le renforcement de matières plastiques.

(30) Priorité: **03.04.78 FR 7809726**

(43) Date de publication de la demande:
**17.10.79 Bulletin 79/21**

(45) Mention de la délivrance du brevet:
**12.05.82 Bulletin 82/19**

(45) Mention de la décision concernant l'opposition:
**20.03.85 Bulletin 85/12**

(84) États contractants désignés:
**BE DE FR GB IT LU NL SE**

(73) Titulaire: **SAINT-GOBAIN INDUSTRIES, 62, Bd Victor
Hugo, F-92209 Neuilly sur Seine (FR)**

(72) Inventeur: **Droux, Michel, 462 Rue Clémenceau,
F-73490 La Ravoire (FR)**
Inventeur: **Bocquet, Gilbert, "Villa Maria" 486 Chemin
sous bois, F-73190 Challes-Les-Eaux (FR)**

(74) Mandataire: **Eudes, Marcel et al, Saint-Gobain
Recherche 39 Quai Lucien Lefranc, F-93304 Aubervilliers
Cedex (FR)**

(56) Documents cités:
**EP - A - 0 000 683
DE - A - 2 003 997
DE - A - 2 328 129
DE - A - 2 604 544
FR - A - 1 360 222
FR - A - 1 490 767
FR - A - 2 110 469
FR - A - 2 186 440
FR - A - 2 340 389
GB - A - 802 549
GB - A - 907 302
GB - A - 919 318
GB - A - 1 278 777**

**J.G. MARSDEN "Improved silane...", Proc.Anniv.Conf.
Soc. of Plast.Ind., Reinf. Plast.-Compos.div. 25 th annual**

## Description

La présente invention est relative à la préparation de fibres de verre utilisées pour le renforcement de matériaux plastiques. Elle concerne notamment l'ensimage des fibres de verre sous forme de filaments continus lors de leur formation à partir de verre fondu ou juste après, ainsi que les fibres de verre revêtues.

L'invention concerne plus particulièrement la préparation de fibres de verre utilisées pour le renforcement de feuilles de composition à mouler,feuilles encore dénommées préimprégnés SMC (Sheet molding compound) à partir desquelles, on fabrique ensuite, par action de la chaleur et de la pression, des produits en matière plastique renforcée.

La fabrication d'articles en matière plastique renforcée par de la fibre de verre à partir de préimprégnés SMC se développe de plus en plus, notamment à cause du faible coût de revient de ce procédé par rapport à ceux des autres procédés de moulage.

Dans l'application SMC, on place sous presse dans un moule un ou plusieurs flans découpés dans une feuille composite de résine et de fibres de verre coupées et, par action de la chaleur et de la pression, on forme l'article. On utilise généralement un flan dont la surface représente environ 60% de celle de l'article à mouler, ce qui fait que la matière plastique contenant la fibre de verre doit fluer dans toutes les directions pour épouser la forme du moule, de façon à conduire à un produit moulé homogène sans points mécaniquement faibles. En plus de bonnes propriétés mécaniques, l'article ainsi fabriqué, généralement commercialisé brut de moulage, doit présenter un bon aspect de surface qui peut se définir, d'une part, par l'absence de fibres visibles à la surface de l'article moulé et, d'autre part, par l'absence de défauts de planéité de surface, tels que les piqûres, les cratères, les vagues de fluage.

Le terme fluage sera utilisé ci-dessous pour désigner aussi bien le déplacement de la matière plastique lors du moulage que celui des fibres ou fils de verre coupés, à des longueurs généralement de 25 ou 50 mm environ.

Les propriétés mécaniques et d'aspect de surface des plastiques renforcés obtenus notamment à partir de préimprégnés SMC dépendent essentiellement des qualités spécifiques de la fibre de verre utilisée pour le renforcement. Or, ces qualités sont données à la fibre de verre par son enrobage, donc généralement par la composition d'ensimage qui lui est appliquée alors qu'elle est sous forme de filaments continus, lors de sa fabrication.

Le traitement que subissent, lors de leur fabrication alors qu'elles sont sous forme de filaments continus, les fibres de verre utilisées pour le renforcement dans les préimprégnés SMC doit donc les rendre aptes au renforcement des plastiques en général, c'est-à-dire qu'il doit non seulement agglomérer les filaments d'un même fil entre eux, les revêtir d'une pellicule lubrifiante pour protéger les filaments d'une abrasion mutuelle entre eux, conserver l'intégrité du fil durant les opérations de bobinage, de coupe, mais aussi favoriser la liaison dans le composite entre le verre et la résine synthétique.

De plus, le traitement doit fournir au fil des propriétés particulières le rendant apte à l'application SMC. Notamment, le fil coupé doit garder son intégrité durant le mûrissement du préimprégné et doit présenter une bonne aptitude au fluage, c'est-à-dire pouvoir se déplacer en même temps que la résine lors du moulage sous pression, de façon à très bien se répartir dans le produit moulé.

On a déjà décrit des ensimages pour fibres de verre utilisées dans le renforcement des préimprégnés SMC. Ainsi, la publication du brevet français No 2110469 décrit une composition d'ensimage comprenant notamment une résine époxyde modifiée, une émulsion d'un copolymère d'acétate de vinyle et de N-méthylolacrylamide, une émulsion d'un copolymère d'acétate de vinyle et d'éthylène. Cette composition d'ensimage procure à la fibre de verre certaines des propriétés déjà citées qui la rendent apte à l'application SMC, en particulier une assez bonne aptitude au fluage, suffisante pour la fabrication de petites pièces. Par contre, les fibres restent visibles dans l'article moulé. En outre, l'aptitude au fluage est insuffisante pour une fabrication de grandes pièces qui, de ce fait, présentent une mauvaise répartition du renfort dans le composite, donc des points mécaniquement faibles.

La demande de brevet français No 77.23198 a proposé une nouvelle composition d'ensimage comprenant notamment un copolymère à base d'acétate de vinyle et de monomères acryliques dont un au moins est à fonction époxyde, composition qui procure un très bon aspect de surface à l'article fabriqué ainsi qu'une répartition suffisamment régulière de la fibre dans l'article surtout lorsque celui-ci est de petite taille. Néanmoins, lorsqu'on veut fabriquer des articles de taille importante, par exemple de l'ordre du mètre et plus de longueur, le fluage des fibres, lors du moulage, est insuffisant.

On connaît également des compositions d'ensimage recommandées pour la fabrication de grandes pièces à partir de préimprégnés SMC et qui sont décrites par exemple dans le brevet français No 2012117 et le brevet US No 4038243. Ces compositions d'ensigmage sont à base de résine de polyester non saturée. Elles procurent à la fibre d'assez bonnes propriétés de fluage. Par contre, elles donnent au fil une coloration jaune qui subsiste après moulage du produit, ce qui donne un mauvais aspect de surface en rendant le fil très visible. C'est pourquoi certains articles ont leurs surfaces grainées ou sont couverts d'une couche de peinture.

On connaît encore, d'après les brevets français Nos 2013040 et 1218015, des compositions d'ensimage pour fibres de verre utilisées pour le renforcement des plastiques en général et qui sont à base de résine alkyle susceptible de polymériser par chauffage avec ou sans l'aide de résine mélamine/formaldéhyde. Les fils ensimés avec cette composition ne présentent pas les caractéristiques leur permettant de fluer largement et de renforcer de façon homogène la résine dans un article de grande taille.

Dans ce domaine général du renforcement des matières plastiques, bien d'autres compositions d'ensimage pour fibres de verre ont été décrites, et notamment dans la publication de brevets anglais No 919318 et français No 1490767. Aucune de ces compositions, cependant, ne contient des agents réticulables entre eux.

Dans un domaine technique autre que l'application SMC et plus généralement autre que l'ensimage des fibres textiles, on connaît aussi, d'après la publication du brevet français No 2340389, un liant pour le renforcement de voiles ou de nappes de fibres de verre servant eux-mêmes à la préparation de produits semi-finis en résine synthétique thermoplastique, liant à base de polyacrylate portant des groupes hydroxy et/ou carboxyle et d'agents réticulants tels que des polyisocyanates bloqués, des composés époxydes, des produits de condensation amine/formaldéhyde. Ce liant procure aux voiles ou nappes de fibres de verre une bonne résistance ainsi qu'une bonne stabilité dimensionnelle. L'invention propose un procédé de fabrication de fibres de verre continues, revêtues par une composition aqueuse d'ensimage comprenant, dans des proportions différentes, des composants apparentés à ceux du liant précité. Cette composition d'ensimage, utilisée pour l'enrobage des filaments continus de verre lors de leur fabrication à partir de verre fondu, montre de façon surprenante d'excellentes qualités pour l'ensimage textile, notamment d'excellentes qualités filmogènes, c'est-à-dire qu'elle se dépose et se répartit de façon très régulière sur les filaments; en même temps elle fournit un fil très intègre. De plus elle fournit un fil de bonne rigidité ou raideur. En outre, à contrario de ce que pouvait laisser supposer la publication du brevet français No 2340389, les fils ne sont pas liés entre eux mais bien isolés et parfaitement adaptés à l'application SMC.

Cette application implique le renforcement, par lesdits fils, de résines thermodurcissables, telles que des résines de polyester, qui sont bien connues par l'homme de métier comme étant très différentes des résines thermoplastiques décrites dans la publication du brevet français No 2340389.

Selon le procédé de l'invention, on étire mécaniquement à grande vitesse des filaments de verre fondu, on revêt les filaments à l'aide d'une composition aqueuse d'ensimage comprenant un système de plusieurs collants réticulables entre eux, comportant au moins un composé présentant de nombreuses fonctions N-méthylol et/ou N−CH$_2$OR, R étant un radical alcoyle, au moins un polymère acrylique, modifié ou non, N-méthylol ou non, au moins un amino-silane susceptible d'entrer dans la réaction de polymérisation des collants, on rassemble les filaments de verre en cours d'étirage sous forme de fils qui sont enroulés en gâteaux, séchés à une température de l'ordre de 130° C, puis assemblés en mèches de stratifils sous forme de pelotes, ou rassemblés directement en mèches sous forme de pelotes et séchés à une température de l'ordre de 130° C.

Le procédé objet de l'invention fournit un fil de verre ayant une excellente intégrité; l'enrobage est peu soluble dans les solvants aromatiques tels que le benzène ou le styrène présents en grande quantité dans les résines thermodurcissables des feuilles à mouler SMC, de sorte que cette intégrité se conserve non seulement lors des opérations de bobinage et de coupe par exemple, mais encore durant le mûrissement des feuilles à mouler SMC et durant l'opération, elle-même, de moulage à chaud. Cette excellente intégrité additionnée à une grande raideur et une bonne élasticité donne au fil une excellente aptitude au fluage. La grande raideur du fil lui permet de supporter les efforts lors du fluage dans l'application SMC tout en restant aussi rectiligne que possible dans la résine. On obtient des articles composites plastique-fibres de verre ayant de bonne propriétés mécaniques en même temps qu'un bon aspect de surface.

Le composé à fonction N-méthylol et/ou à fonction N−CH$_2$OR est une résine aminoplaste formolée, éthérifiée ou non, à savoir la mélamine/formaldéhyde, l'urée/formaldéhyde, l'amide/formaldéhyde ou un mélange de ces résines copolymérisées ou non. De préférence, on utilise une mélamine/formaldéhyde partiellement éthérifiée qui procure les meilleurs résultats.

Le polymère acrylique peut être à base d'un seul ou de plusieurs types de monomères acryliques, pour former dans le dernier cas un copolymère. Comme monomères acryliques, on peut utiliser par exemple l'acrylamide, l'acrylonitrile, un acrylate d'alkyle, l'acide acrylique, l'acide méthacrylique, un ester acrylique. Le polymère acrylique peut aussi présenter des fonctions N-méthylol ou d'autres fonctions susceptibles de réagir avec les N-méthylol ou les N−CH$_2$OR, par exemple des fonctions acides, amines, amides.

De préférence, la composition d'ensimage comprend plusieurs polymères à base de monomères acryliques, chacun d'eux pouvant jouer un rôle particulier dans l'ensimage. Ainsi, on peut utiliser un polymère très réactif vis-à-vis du composé à fonction N-méthylol et/ou N−CH$_2$OR, par exemple le polyacrylamide, en même temps qu'on utilise un deuxième polymère qui a priori participe moins à la réaction de réticulation du système collant mais qui est un bon filmogène, c'est-à-dire qu'il se dépose et se répartit de façon très régulière sur la fibre. Un tel polymère peut être par exemple un copolymère de l'acétate de vinyle et de la N-méthylolacrylamide, ou un copolymère à base d'acétate de vinyle et de monomères acryliques dont un au moins est à fonction époxyde, copolymère qui est commercialisé sous l'appellation D$_z$ 23 par la société Produits Chimiques Rousselot. La composition d'ensimage peut encore comprendre un polymère ou copolymère vinylique jouant ce rôle de filmogène, par exemple un copolymère acétate de vinyle/éthylène tel le produit commercialisé sous l'appellation Airflex 400 par la société Safic-Alcan.

Le silane qui entre dans la composition d'ensimage peut être un des aminosilanes employés traditionnellement dans les ensimages pour fibres de verre utilisées pour le renforcement des plastiques, qui sont bien connus de l'homme de métier et qui sont susceptibles de réagir avec les fonctions N-méthylol ou $N-CH_2OR$ de façon à entrer dans la réaction de réticulation du collant. Avantageusement, on utilise un aminosilane tel le γ-aminopropyltriéthoxysilane, le γ-aminopropyl-triméthoxysilane, le N-β-aminoéthyl γ-amino-propyltriméthoxysilane, les uréidosilanes, les polyuréidosilanes, les polyazamidosilanes ou encore un mélange de ces silanes.

La réaction de réticulation du système de collants intervient lors du séchage des fils à une température de l'ordre de 130° C. Pour faciliter cette réaction de réticulation on peut ajouter, dans la composition d'ensimage du formaldéhyde, d'autres agents de réticulation ou encore des catalyseurs.

Lorsque la composition d'ensimage comprend de la mélamine/formaldéhyde, ces additifs ne sont généralement pas nécessaires, la mélamine/form-aldéhyde réticulant facilement à partir d'une température de l'ordre de 75° C.

D'autre part, on veut éviter une réticulation trop rapide qui se produirait par exemple avant l'opération d'ensimage proprement dite. Ces additifs sont donc plutôt utilisés lorsque la composition comprend peu de fonctions N-méthylol.

Comme il a déjà été décrit, la réticulation du collant sur le fil rend l'enrobage en grande partie insoluble dans les solvants aromatiques, notamment dans le styrène. Cette insolubilité, favorable au maintien de la bonne raideur et de la bonne intégrité, peut jouer défavorablement vis-à-vis du pontage fibre de verre-matière plastique en gênant la liaison silane-plastique. C'est pourquoi il est avantageux, lorsque le silane entre dans la réaction de réticulation avec le système de collants, d'ajouter à la composition d'ensimage un composé susceptible de réagir avec le système de collants et qui de plus lui fournit des sites réactifs, par exemple par un apport de doubles liaisons chimiques qui, lors du renforcement, réagissent avec la matière plastique. En modifiant la concentration de ce composé dans la composition d'ensimage, on peut ainsi maîtriser la réaction de pontage verre-résine plastique. Comme agent susceptible de fournir des doubles liaisons, on peut utiliser par exemple l'acrylamide, l'acide acrylique, un ester acrylique. De préférence, on utilise le monomère N-méthylolacrylamide qui réagit particulièrement bien avec le collant.

La composition d'ensimage peut, en outre et avantageusement, contenir un agent antistatique, par exemple du chlorure de magnésium, du chlorure d'ammonium ou, avantageusement, du chlorure de lithium qui peut être utilisé en faible quantité. L'addition d'un agent antistatique procure à la fibre de verre une inertie vis-à-vis de l'électricité statique, ce qui facilite grandement les opérations effectuées sur les fils, par exemple la coupe.

L'extrait sec de la composition d'ensimage est de préférence compris entre 6 et 15% en poids.

Un fil convient particulièrement bien pour l'application SMC lorsqu'il est ensimé à l'aide de la composition suivante:

4 à 15% en poids d'une solution à environ 30% de polyacrylamide,

1,5 à 6% en poids d'une solution à environ 70% de mélamine/formaldéhyde,

4 à 15% en poids d'une émulsion à environ 50% d'un copolymère de l'acétate de vinyle et de la N-méthylolacrylamide,

0,01 à 1% en poids de γ-aminopropyltriéthoxy-silane,

0 à 1% en poids de N-méthylolacrylamide monomère,

0 à 1% en poids de chlorure de lithium, complément à 100% avec de l'eau désionisée.

D'autres caractéristiques et avantages de l'invention ressortiront de la description suivante et des exemples particuliers de mise en œuvre.

*Exemple 1:*

On prépare une composition d'ensimage comprenant les composants suivants exprimés en pourcentages par rapport à la composition totale:

10% en poids d'une solution de polyacrylamide,

4% en poids d'une solution de mélamine/form-aldéhyde,

10% en poids d'une émulsion d'un copolymère d'acétate de vinyle et de la N-méthylolacrylamide,

0,3% en poids de γ-aminopropyltriéthoxysilane, complément à 100% par de l'eau désionisée.

Le pH de la solution est de 7. L'extrait sec est de 10% en poids. Le polyacrylamide est par exemple un polymère en solution eau-alcool à 33% d'extrait sec qui est commercialisé sous l'appellation 6T 98 par la société Soprosoie.

La mélamine/formaldéhyde est une mélamine/ formaldéhyde alcoylée en solution aqueuse.

On utilise une solution à 70% d'extrait sec d'une résine de mélamine commercialisée sous l'appellation Prox M3 15763 par la société Protex.

On peut utiliser également, après ajustement, une solution à 80% d'extrait sec d'une résine de mélamine commercialisée sous l'appellation Cy-mel 481 par la société American Cyanamid.

Le copolymère d'acétate de vinyle et de N-méthylolacrylamide en émulsion est un polymère de poids moléculaire élevé qui comprend environ 97 monomères acétate de vinyle pour 3 mono-mères N-méthylolacrylamide et qui est commer-cialisé sous l'appellation 125/2828 par la société National Resin.

L'émulsion est de 50% d'extrait sec et non ionique. Le silane employé comme agent de pontage est le γ-aminopropyltriéthoxysilane que l'on utilise pur. On peut prendre par exemple le silane commercialisé sous l'appellation A 1100 par la société Union Carbide.

Pour préparer la composition d'ensimage, on place dans un récipient, et après dilution de moitié avec de l'eau désionisée, les quantités préalablement indiquées de la solution de mélamine/formaldéhyde, de l'émulsion du copolymère d'acétate de vinyle et de N-méthylolacrylamide, de la solution de polyacrylamide, puis le silane non dilué. La solution a un pH de 8. A température ambiante et à ce pH, la mélamine/formaldéhyde ne s'autoréticule pas ni ne réagit avec les autres composants de la composition, et la solution peut être conservée plusieurs jours le cas échéant.

Dans l'exemple présent, lors du fibrage d'un verre de type E, les filaments de verre obtenus par la fusion de billes ou la fusion directe ont un diamètre de 10 ou 14 µ environ et sont assemblés en fils de 40 ou 80 tex (1 tex = 1 gramme par 1000 mètres de fil) après qu'on leur a appliqué, par des méthodes bien connues, l'ensimage précédemment préparé. Le fil est enroulé de façon continue pour former des gâteaux qui sont séchés à l'air chaud à 130° C pendant 12 h. Durant le séchage, les différents composants de l'enrobage réticulent entre eux pour former le système de collants. La réticulation s'établit notamment par réaction des groupements N-méthylol avec élimination d'eau et de formaldéhyde le cas échéant.

Les fils de plusieurs gâteaux sont ensuite bobinés facilement, sans formation de bourre, pour former des mèches dont le titre global peut varier, par exemple 2400 ou 4800 tex.

On peut également rassembler les fils directement en mèches sous forme de pelotes et les sécher ensuite.

Le fil de verre porte environ 1,5% en poids d'ensimage sec par rapport au poids total de la fibre ensimée. Les fils sont extrêmement raides. Leur raideur mesurée par la méthode décrite ci-après a une valeur moyenne de 180.

Pour mesurer la raideur d'un fil on prend une mèche de 50 cm de long que l'on accroche en son milieu par une pointe. La mèche forme un arc et on mesure la corde qui le sous-tend à une distance de 60 mm du point d'ancrage. Dans cet exemple, la corde a une longueur de 180 mm en moyenne.

Le fil est bien protégé. Il présente une très bonne intégrité, c'est-à-dire une très bonne cohésion entre filaments. Son intégrité mesurée par la méthode décrite ci-après est de 1,05.

Pour mesurer l'intégrité, on coupe des bouts de fils d'environ 50 mm de long que l'on étale au hasard sur une surface plane généralement en verre. Sur le verre, on place une grille carrée comprenant 16 carreaux d'environ 2 cm de côté. Le nombre de fils par carreau est de l'ordre de quelques unités. On note les fils qui se situent dans chaque carreau, en attribuant un point à un fil intègre constitué d'un seul bâtonnet, en attribuant deux points à un fil filamenté en partie et en attribuant trois points à un fil entièrement divisé en filaments. La mesure de l'intégrité peut donc varier entre 1 et 3. On additionne les points dans chaque carreau. Le total des points correspondant à un carreau est divisé par le nombre de fils qu'il comprend. On procède de la même façon pour l'ensemble des 16 carreaux. On obtient finalement une intégrité moyenne statistique qui, dans le cas de l'exemple, a une valeur moyenne de 1,05, ce qui est très bon.

Le fil obtenu est blanc. Son enrobage est soluble à 20% environ dans le benzène sous reflux.

On utilise les fils de verre ensimés pour le renforcement de préimprégnés SMC. Les différents types de préimprégnés connus peuvent être renforcés par le fil ensimé, par exemple les préimprégnés de type blanc, de type gris, de type bleu, de type bas retrait. La description suivante, non limitative, se réfère au renforcement de préimprégné de type bas retrait.

Un préimprégné de type bas retrait est préparé à partir des composants suivants :

| Composants | Nombre de parties |
|---|---|
| Résine de polyester insaturée | 60 |
| Polymère acrylique en solution dans le styrène (compensateur de retrait) | 40 |
| Carbonate de calcium | 150 |
| Démoulant interne | 3 |
| Catalyseur haute température | 1 |
| Agent de mûrissement | 2,5 |

On place dans un récipient cylindrique, muni d'un agitateur, 60 parties d'une résine polyester insaturée, par exemple une résine commercialisée sous l'appellation Paraplex P 340 par la société Rohm & Haas. On ajoute 40 parties d'un polymère acrylique en solution dans le styrène et qui agit comme compensateur de retrait, par exemple une résine commercialisée sous l'appellation Paraplex P 701 par la société Rohm & Haas. On ajoute ensuite sous agitation un perbenzoate de butyle tertiaire qui est un catalyseur pour hautes températures, par exemple le produit commercialisé sous l'appellation Trigonox C par la société La Chalonnaise des Peroxydes.

On ajoute ensuite 3 parties de stéarate de zinc qui est un démoulant interne puis, toujours sous agitation, on ajoute 150 parties d'un carbonate de calcium en poudre dont les particules ont un diamètre moyen de 2,5 µm, par exemple le produit commercialisé sous l'appellation Millicarb par la société Omya.

Lorsque le mélange est homogénéisé, on ajoute de l'hydroxyde de magnésium qui est un agent de mûrissement, par exemple le produit commercialisé sous l'appellation Marinco H 142 par la société Merck Chemicals. Le mélange est alors porté par agitation à une température de 32° C environ. On obtient une pâte qui est déposée sur une feuille de polyéthylène à l'aide d'une racle sur une machine SMC. La mèche de verre préparée selon l'exemple décrit précédemment est découpée pour former des fibres de 50 mm de longueur environ, à l'aide d'un coupeur Finn et Fram placé au-dessus de la machine SMC. Bien entendu, on peut découper la mèche à des dimensions différentes, par exemple 25 mm. On dépose les fils coupés sur la première couche de résine. On forme ainsi un tapis de fibres dont l'épaisseur est d'environ 60 mm. On dépose ensuite une deuxième couche de résine que l'on recouvre d'une deuxième feuille mince de polyéthylène. La fibre de verre représente environ 30% en poids total du composite.

Le composite passe entre des rouleaux qui ont pour rôle de faire pénétrer la résine entre les fibres de verre et de réduire son épaisseur à quelques millimètres, puis il est enroulé pour former un rouleau pouvant être manipulé grâce aux feuilles extérieures de polyéthylène. On laisse mûrir le rouleau à température ambiante pendant une durée pouvant atteindre plusieurs jours.

Au bout de cette période le préimprégné est prêt à l'emploi. On découpe dans la feuille de préimprégné un flan d'une surface de l'ordre de 60% de la surface de l'objet moulé fini, on retire les deux feuilles de protection de polyéthylène et on place le flan dans un moule. Suivant l'épaisseur de l'article, on peut superposer plusieurs flans. L'article est moulé sous presse à une température de l'ordre de 150° C et sous une pression de l'ordre de 50 bar. L'opération de pressage dure environ 1 min/mm d'épaisseur.

On moule ainsi des bacs de forme approximativement parallélépipédique, de 500 mm de longueur sur 300 de large et 200 de haut et dont l'épaisseur est de 4 mm. Ces bacs présentent une très bonne résistance mécanique.

Dans cet exemple, de même que dans les exemples suivants, on a évalué, d'une manière relative, les qualités du fil ensimé, essentiellement en fonction de trois critères:

— l'aptitude du fil au fluage qui se traduit par une répartition homogène du fil dans le produit moulé,

— la planéité de surface en notant la présence de défauts tels que les piqûres, les cratères, les vagues de fluage,

— l'absence de visibilité du fil.

On a donné 5 lorsque le résultat est très bon et au contraire 1 lorsqu'il est très mauvais. On donne 2+ par exemple lorsque le résultat vaut plus de 2 mais reste inférieur à 3. Le fil de l'exemple 1 obtient 5 pour le fluage, 4 pour la planéité de surface et 4 pour la non-visibilité du fil. En effet, le fil est très peu visible dans la matière plastique et il est réparti uniformément. Il apparaît sous forme de bâtonnets, ce qui montre qu'il a gardé son intégrité et sa raideur durant le mûrissement du préimprégné. ainsi que lors du moulage.

*Exemple 2:*

On fabrique un fil de verre ensimé suivant l'exemple 1, en utilisant la même composition d'ensimage à ceci près que le silane est pris sous la forme d'un hydrolysat. Pour cela on prépare de l'eau à pH de 4 par addition d'acide acétique, on ajoute lentement le silane et on réajuste le pH à 4. La composition d'ensimage obtenue a un pH de 4,5 environ, elle est peu stable et doit être utilisée assez rapidement après sa préparation. L'extrait sec de la composition est de 10% en poids. Le fil enrobé porte 1,7% d'ensimage, il est blanc et présente une raideur moyenne de 175 et une intégrité moyenne de 1,07. La solubilité de l'ensimage dans le benzène est de 22% environ. Utilisé pour le renforcement des préimprégnés SMC, il fournit un produit moulé renforcé de façon homogène et qui a bon aspect, la notation étant la suivante: 5 pour le fluage, 4 pour la planéité de surface, 4 pour la non-visibilité du fil.

*Exemple 3:*

On fabrique un fil de verre ensimé suivant l'exemple 1, en utilisant la même composition d'ensimage, à ceci près que l'on rajoute à cette composition 0,3% en poids de chlorure de lithium qui agit comme agent antistatique. Le chlorure de lithium est ajouté sous la forme d'une solution aqueuse à 6%, après que l'on a mélangé les autres composants. L'extrait sec de la composition est de 10,3% en poids. Le fil enrobé porte 1,6% d'ensimage, il est blanc et présente une raideur moyenne de 175. Aucune filamentation n'est visible, son intégrité étant de 1. Il n'est absolument pas sensible à l'électricité statique, ce qui est particulièrement intéressant car cela facilite les opérations qu'il subit ultérieurement, telles que la coupe. De plus, l'absence d'électricité statique favorise particulièrement bien la formation d'un tapis plat régulier et non hérissé de fils orientés de façon aléatoire. Dans cet exemple le tapis de fibres lors de la fabrication du préimprégné SMC a une épaisseur de 35 mm environ seulement. Utilisé pour le renforcement des préimprégnés SMC, il fournit un produit moulé renforcé de façon homogène et qui a bon aspect, la notation étant la suivante: 5 pour le fluage, 4 pour la planéité de surface, 4 pour la non-visibilité du fil.

*Exemples 4 et 5:*

On fabrique un fil de verre ensimé, suivant l'exemple 1, en modifiant les proportions des différents composants de la composition:

| Exemple 4 | Exemple 5 |
|---|---|
| 12% | 6% en poids de la solution de polyacrylamide |
| 4% | 2% en poids de mélamine/ formaldéhyde |
| 6% | 13% en poids de l'émulsion d'un copolymère d'acétate de vinyle et de N-méthylolacrylamide |
| 0,3% | 0,3% en poids de γ-aminopropyltriéthoxysilane |

Les extraits secs des compositions sont respectivement de 9 et de 8,8% en poids.

Les fils enrobés portent respectivement 1,25 et 1,60% en poids d'ensimage. Ils présentent une raideur moyenne de 180 et 175 alors que leur intégrité moyenne est de 1,10 et 1,07. Ils sont blancs. Les ensimages sont solubles à 15 et 30% respectivement dans le benzène.

L'exemple 4 montre qu'un excès de polyacrylamide procure au fil une raideur plus grande. On peut expliquer ce résultat par une réticulation plus importante du système de collants, réticulation qui peut être mise en évidence par une insolubilité plus grande que lorsque la composition contient moins de polyacrylamide. L'exemple 5 semble montrer que le copolymère d'acétate de vinyle et de N-méthylolacrylamide entre peu dans la réaction de réticulation. Par contre, ce composé, pris en quantité importante, procure au fil une meilleure intégrité, sans doute à cause des qualités filmogènes dudit composé.

Les deux fils sont parfaitement utilisables pour le renforcement des préimprégnés SMC. Ils procurent des articles renforcés de façon homogène et qui présentent un bon aspect de surface. La notation est la suivante dans les deux cas: 5 et 4+ pour le fluage, 4 et 3+ pour la planéité de surface, 4 pour la non-visibilité du fil.

*Exemple 6:*

On fabrique un fil de verre ensimé, suivant l'exemple 1, en utilisant la composition d'ensimage de l'exemple 3, dans laquelle le copolymère d'acétate de vinyle et de N-méthylolacrylamide est remplacé dans les mêmes proportions par un copolymère acétate de vinyle/éthylène, par exemple un produit commercialisé sous l'appellation Airflex 400 par la société Safic-Alcan utilisé comme filmogène. L'extrait sec de la composition est de 10,3% en poids.

Le fil enrobé est blanc et porte 1,50% en poids d'ensimage. Il présente une raideur moyenne de 175 et une intégrité moyenne de 1,05. L'ensimage est soluble à environ 20% dans le benzène. Le comportement du fil dans le renforcement des préimprégnés SMC est très proche de celui de l'exemple 3. La notation est de 5 pour le fluage, 4 pour la planéité de surface, 4 pour la non-visibilité du fil.

*Exemple 7:*

On fabrique un fil de verre ensimé, suivant l'exemple 1, en utilisant la composition d'ensimage suivante:
7% en poids d'une solution aqueuse à 50% environ d'un copolymère à base d'acrylate d'éthyle, d'acrylonitrile, d'acide acrylique,
4% en poids d'une solution de mélamine/formaldéhyde,
9% en poids d'une émulsion du copolymère d'acétate de vinyle et de N-méthylolacrylamide,
0,3% en poids de γ-aminopropyltriéthoxysilane, complément à 100% par de l'eau désionisée.
L'extrait sec de la composition est de 11,3% en poids.
Dans cette composition, on a remplacé le polyacrylamide par un copolymère à base d'acrylate d'éthyle, d'acryloniraile, d'acide acrylique, les monomères étant pris dans les proportions suivantes: 22% d'acide acrylique, 16% d'acrylonitrile et 62% d'acrylate d'éthyle.
Le fil enrobé blanc porte 1,35% en poids d'ensimage. Il présente une raideur moyenne de 161 et une intégrité moyenne de 1,07. L'ensimage est soluble à environ 26% dans le benzène, ce qui est légèrement supérieur à la solubilité de l'ensimage de l'exemple 1, mais cela n'affecte pas trop les qualités du fil qui, utilisé dans les préimprégnés SMC, procure également un article renforcé de façon homogène, lequel, de plus, présente un bel aspect de surface. La notation est de 4+ pour le fluage, 4 pour la planéité de surface et 4 pour la non-visibilité du fil.

*Exemple 8:*

On fabrique un fil de verre ensimé, suivant l'exemple 1, en utilisant la composition d'ensimage suivante:
10% en poids d'une solution aqueuse à 33% environ d'un copolymère à base d'acrylate d'éthyle, d'acrylonitrile, d'acide acrylique,
4% en poids d'une solution de mélamine/formaldéhyde
10% en poids d'une émulsion du copolymère d'acétate de vinyle et de N-méthylolacrylamide,
0,3% en poids de γ-aminopropyltriéthoxysilane,
0,3% en poids de chlorure de lithium,
complément à 100% par de l'eau désionisée.
L'extrait sec de la composition est de 11,6% en poids.
Dans cette composition, on a remplacé le polyacrylamide par un copolymère à base d'acrylate d'éthyle, d'acrylonitrile, d'acide acrylique, les monomères étant pris dans les proportions suivantes: 22% d'acide acrylique, 16% d'acrylonitrile et 62% d'acrylate d'éthyle, par exemple le produit commercialisé sous l'appellation 8T 93 par la société Soprosoie.
Le fil enrobé blanc porte 1,45% en poids d'ensimage. Il présente une raideur moyenne de 165 et une intégrité moyenne de 1,07. L'ensimage est soluble à environ 25% dans le benzène.
La notation est de 5 pour le fluage, 4 pour la planéité de surface et 4 pour la non visibilité du fil.

*Exemple 9:*

On fabrique un fil de verre ensimé suivant l'exemple 1, en utilisant la composition d'ensimage suivante:
2,2% en poids d'une solution à 75% environ de mélamine/formaldéhyde éthérifiée,
13% en poids d'une émulsion d'un copolymère d'acétate de vinyle et de N-méthylolacrylamide,
0,4% en poids de γ-aminopropyltriéthoxysilane,
0,3% en poids de chlorure de lithium,
complément à 100% par de l'eau désionisée.
L'extrait sec de la composition est de 9,5 en poids.
La mélamine/formaldéhyde éthérifiée est par exemple le produit commercialisé sous l'appellation M S 75 par la société Protex.
Le fil enrobé porte 1% en poids d'ensimage. Il présente une raideur moyenne un peu faible, de 165. Son intégrité moyenne de 1,30 est plutôt mauvaise. L'ensimage est soluble à environ 45% dans le benzène, ce qui est supérieur à la solubilité de l'ensimage de l'exemple 3. Ces différences influent défavorablement sur l'aptitude au fluage du fil qui procure un article renforcé de façon moins homogène que dans les exemples précédents. La notation est la suivante: 4 pour le fluage, 3+ pour la planéité de surface et 4 pour la non-visibilité du fil.

*Exemple 10:*

On fabrique un fil de verre ensimé, suivant l'exemple 1, en utilisant la composition d'ensimage de l'exemple 9, dans laquelle on ajoute 0,8% en poids d'un acétate de butylcarbitol, par exemple le produit commercialisé sous cette appellation par la société Union Carbide. L'extrait sec de la composition est de 10,3% en poids. Le fil enrobé porte 1,35% en poids d'ensimage. L'addition de l'acétate de butylcarbitol influe peu sur la raideur qui est de 165, mais elle améliore l'intégrité du fil qui est de 1,1. La solubilité de l'ensimage est d'environ 36% dans le benzène. Utilisé dans le renforcement de préimprégnés SMC, le fil procure des résultats meilleurs que ceux de l'exemple 8, mais qui restent inférieurs à ceux des exemples précédents. La notation est la suivante: 4 pour le fluage, 3+ pour la planéité de surface et 4 pour la non-visibilité du fil.

*Exemple 11:*

Dans cet exemple on fabrique le fil suivant l'exemple 1, en utilisant la composition d'ensimage de l'exemple 3, à laquelle on ajoute 0,2% en poids du monomère N-méthylolacrylamide. L'extrait sec de la composition est de 10,5% en poids.

Cette addition n'influe pas sur les qualités de raideur et d'intégrité du fil ni sur la solubilité de l'ensimage dans le benzène. Cependant, l'utilisation du fil ensimé dans le renforcement des préimprégnés SMC peut procurer au produit moulé une amélioration de ses propriétés mécaniques. Cette amélioration peut s'expliquer par une meilleure liaison verre/matrice plastique due aux sites réactifs, notamment aux doubles liaisons chimiques apportées au système collant par le monomère N-méthylolacrylamide.

*Exemple 12:*

On prépare un fil ensimé suivant l'exemple 1, en utilisant une composition d'ensimage connue, qui est décrite dans le brevet français N° 2012117 et qui est la suivante:

8,4% en poids de résine de polyester non saturé,
1 mol d'anhydride phtalique,
1 mol d'anhydride maléique,
2 mol de propylèneglycol, cuites jusqu'à un indice d'acide de 30-35,
3,6% en poids de solvant,
1,09% en poids d'un agent émulsionnant Pluronic F 77[+],
0,50% en poids de γ-méthacryloxypropyltri-méthoxysilane,
0,04% en poids d'acide acétique glacial pour ajuster le pH,
0,126% en poids d'un lubrifiant cationique, le AHCO 185 AE[++],
0,054% en poids d'un deuxième lubrifiant cationique, le AHCO 185 AN[+++],
0,70% en poids de résine de polyester saturé,

1 mol d'ahnydride phtalique,
1 mol d'anhydride succinique,
2,3 mol de propylèneglycol cuites jusqu'à un indice d'acide 35-40,
complément à 100% par de l'eau désionisée.

L'extrait sec de la composition est de 11% en poids.

[+] Pluronic F77 est une marque déposée de la Wyandotte Chemical Corp. pour un produit de condensation d'éthylèneglycol et d'une base hydrophobe formée en condensant l'hydroxyde de propylène avec le propylèneglycol.

[++] AHCO 185AE est une marque déposée de la Arnold Hoffman Co. pour le produit réactionnel de la tétraéthylènepentamine et de l'acide pélargonique, et solubilisé avec l'acide acétique.

[+++] AHCO 185AN est une marque déposée de la Arnold Hoffman Co. pour le produit réactionnel de la tétraéthylènepentamine et de l'acide solubilisé avec l'acide acétique.

Le fil enrobé porte 2% en poids d'ensimage. Sa raideur moyenne est de 170 et son intégrité moyenne de 1,20. La solubilité de l'ensimage est de 20% environ dans le benzène. Le fil obtenu est jaune et très sensible à l'électricité statique. Utilisé dans le renforcement des préimprégnés SMC, le fil de par sa couleur jaune reste très visible dans le produit moulé. D'autre part, la mauvaise intégrité est néfaste à un bon fluage, certains fils perdant leur structure de bâtonnets.

La cotation est la suivante: 4 pour le fluage, 4 pour la planéité de suface, 2+ pour la non-visibilité du fil.

*Exemple 13:*

On fabrique le fil ensimé suivant l'exemple 1, en utilisant une composition d'ensimage décrite dans le brevet US N° 4038243 employée généralement dans l'application SMC pour les grandes pièces.

Cette composition comprend, comme celle de l'exemple 11, un collant à base d'un polyester insaturé et d'un polyester saturé.

L'extrait sec de la composition est de 10,5% en poids.

Le fil ensimé porte 1,50% en poids d'ensimage. Sa raideur moyenne qui est de 140 est très faible. Son intégrité vaut 1,15, ce qui est assez moyen. La solubilité de l'ensimage dans le styrène de 15% environ.

Comme dans l'exemple 12, le fil se charge facilement en électricité statique. Utilisé pour le renforcement de préimprégnés SMC, le fil procure des articles moins résistants mécaniquement que ceux obtenus dans les exemples 1 à 11. Cette différence dans les propriétés mécaniques s'explique par une mauvaise répartition du fil dans la matière plastique due à la mauvaise aptitude au fluage du fil qui, lors de l'opération de moulage, forme des ondulations, des recroquevillements, des boucles. La notation est la suivante: 3+ pour le fluage, 4 pour la planéité et 2+ pour la non-visibilité du fil.

Les bons résultats procurés par l'invention sont mis en évidence dans le tableau suivant qui rassemble la notation des différents exemples:

| Fil préparé dans l'exemple N° | Selon l'invention | | | | | | | | | | | Etat de la technique | |
|---|---|---|---|---|---|---|---|---|---|---|---|---|---|
| | 1 | 2 | 3 | 4 | 5 | 6 | 7 | 8 | 9 | 10 | 11 | 12 | 13 |
| Aptitude au fluage | 5 | 5 | 5 | 5 | 4+ | 5 | 4+ | 5 | 4 | 4 | 5 | 4 | 3+ |
| Planéité de surface | 4 | 4 | 4 | 4 | 3+ | 4 | 4 | 4 | 3+ | 3+ | 4 | 4 | 4 |
| Visibilité du fil | 4 | 4 | 4 | 4 | 4 | 4 | 4 | 4 | 4 | 4 | 4 | 2+ | 2+ |

Les articles obtenus à partir de préimprégnés renforcés par de la fibre de verre préparée selon les exemples 1 à 11, présentent un bon aspect de surface avec une bonne planéité et une très faible visibilité des fils.

Parmi ces films ceux estimés à partir de composition contenant de la mélamine/formaldéhyde faiblement éthérifiée sont sensiblement supérieurs dans leur aptitude au fluage.

L'apport d'un agent antistatique dans la composition d'ensimage procure des fils insensibles à l'électricité statique, ce qui facilite beaucoup certaines opérations réalisées sur le fil, telle la coupe qui peut alors s'effectuer sans difficultés, sans ioniser l'atmosphère par l'emploi de barres métalliques antistatiques. C'est pourquoi, dans sa forme préférée, la composition d'ensimage de l'invention contient un agent antistatique qui est de préférence du chlorure de lithium.

D'une façon plus générale, la réalisation industrielle de l'invention est relativement aisée. Par exemple, à aucun moment on n'a observé de bourre. Malgré sa grande raideur, le fil de l'invention peut former, notamment lors de la préparation des préimprégnés SMC, des tapis plats ou peu gonflants.

Les fils ensimés de l'invention peuvent être également incorporés à des préimprégnés en forme de boudins qui, de même que les feuilles SMC, sont utilisés pour la fabrication de pièces moulées et qui sont encore désignés par Premix Bulk Molding Compound ou Dough Molding Compound.

Le bon aspect des articles moulés autorise leur commercialisation alors qu'ils sont bruts de moulage sans qu'il soit nécessaire d'avoir une surface grainée ou de la peindre.

## Revendications

1. Procédé de fabrication de fibres de verre continues, revêtues d'un enrobage, comprenant la suite d'opérations suivantes:
- on étire mécaniquement à grande vitesse des filaments de verre fondu,
- on revêt les filaments continus à l'aide d'une composition aqueuse d'ensimage,
- on rassemble les filaments de verre en cours d'étirage sous forme de fils qui sont enroulés en gâteaux, séchés, puis assemblés en mèches de stratifils sous forme de pelotes, ou rassemblés directement en mèches sous forme de pelotes et séchés,

caractérisé en ce que les filaments sont revêtus à l'aide d'une composition aqueuse d'ensimage comprenant un système de collants réticulables comportant au moins un composé présentant de nombreuses fonctions N-méthylol et/ou $N-CH_2OR$ avec R étant un radical alcoyle, ce composé étant choisi dans le groupe des résines aminoplastes formolées, éthérifiées ou non, comprenant la mélamine/formaldéhyde, l'urée/formaldéhyde, l'amide/formaldéhyde, réticulables avec au moins un polymère acrylique modifié ou non, et au moins un aminosilane susceptible de réagir avec le système de collants et la surface de verre de la fibre, et en ce qu'on sèche les gâteaux ou les pelotes à une température de l'ordre de 130° C de façon à provoquer la réticulation du système de collants.

2. Procédé selon la revendication 1, caractérisé en ce que la résine aminoplaste est la mélamine/formaldéhyde.

3. Procédé selon la revendication 2, caractérisé en ce que la mélamine/formaldéhyde est partiellement éthérifiée.

4. Procédé selon l'une des revendications 1 à 3, caractérisé en ce que l'aminosilane est le γ-aminopropyltriéthoxysilane.

5. Procédé selon l'une des revendications 1 à 4, caractérisé en ce que le système de collants contient au moins deux composés acryliques dont l'un est un bon filmogène.

6. Procédé selon l'une des revendications 1 à 5, caractérisé en ce que la composition d'ensimage comprend essentiellement et dans les proportions suivantes:
- 4 à 15% en poids d'une solution de polyacrylamide,
- 1,5 à 6% en poids d'une solution de mélamine/formaldéhyde,
- 4 à 15% en poids d'une émulsion d'un copolymère d'acétate de vinyle et de N-méthylolacrylamide,
- 0,01% en poids d'un aminosilane,
- 0 à 1% en poids de N-méthylolacrylamide monomère,
- 0 à 1% en poids de sel hygroscopique tel le chlorure de lithium,
complément à 100% en eau désionisée.

7. Procédé selon l'une des revendications 1 à 6, caractérisé en ce que la composition d'ensimage contient en outre de l'acide acétique cristallisable.

8. Procédé selon l'une des revendications 1 à 7, caractérisé en ce que la composition d'ensimage contient du formaldéhyde libre.

9. Procédé selon l'une des revendications 1 à 8, caractérisé en ce que la composition d'ensimage contient essentiellement:
— 10% en poids d'une solution de polyacrylamide,
— 4% en poids d'une solution de mélamine/formaldéhyde faiblement éthérifiée,
— 10% en poids d'une émulsion d'un copolymère d'acétate de vinyle et de N-méthylolacrylamide,
— 0,3% en poids de γ-aminopropyltriéthoxysilane pur,
— 0,3% en poids de chlorure de lithium, complément à 100% en eau désionisée.

10. Procédé selon la revendication 9, caractérisé en ce que la composition d'ensimage contient en outre 0,2% en poids de N-méthylolacrylamide monomère.

11. Fibre de verre ensimée obtenue par la mise en œuvre du procédé selon l'une des revendications 1 à 10.

12. Fibre de verre ensimée selon la revendication 11, caractérisée en ce que le poids de l'ensimage sur la fibre représente 0,5 à 3% environ du poids total de la fibre ensimée et séchée.

13. Fibre de verre ensimée selon l'une des revendications 11 ou 12, caractérisée en ce que l'ensimage qu'elle porte est soluble à moins de 50% et de préférence à moins de 30% dans le benzène.

14. Composite de matière plastique renforcée par des fibres de verre, caractérisé en ce qu'il contient des fibres de verre selon l'une des revendications 11 à 13.

15. Application des fibres de verre ensimées selon l'une des revendications 11 à 13 au renforcement de préimprégnés sous forme de feuilles SMC ou de boudins.

16. Préimprégnés SMC ou sous forme de boudins comprenant des fibres de verre ensimées selon l'une des revendications 11 à 13.


## Patentansprüche

1. Verfahren zur Herstellung von kontinuierlichen, mit einem Überzug versehenen Glasfasern, bei dem mechanisch mit hoher Geschwindigkeit Filaments aus geschmolzenem Glas gezogen, die kontinuierlichen Filamente mit Hilfe einer wässerigen Schmälzeverbindung überzogen und die Glasfilamente beim Ziehen in Form von Fäden zusammengefasst werden, die zu Spinnwickeln gewickelt, getrocknet und dann zu Vorgespinststrängen in Form von Knäueln zusammengefasst, oder unmittelbar zu knäuelartigen Vorgespinsten zusammengefügt und getrocknet werden, dadurch gekennzeichnet, dass die Filamente mit Hilfe einer wässerigen Zusammensetzung einer Schmälze überzogen werden, die ein vernetzbares Klebemittelsystem aufweist, das wenigstens eine Verbindung mit zahlreichen funktionellen N-Methylalkohol- und/oder N−CH$_2$OR-Gruppen enthält, wobei R ein radikalisches Alkyl ist und diese Verbindung gewählt ist aus der Gruppe von verätherten oder nicht verätherten Formaldehyd/Aminoplast-Harzen, enthaltend Melamin/Formaldehyd, Harnstoff, Formamid, welche mit wenigstens einem modifizierten oder nicht modifizierten Acrylpolymer vernetzbar sind, und wenigstens ein Aminosilan, das mit dem Klebemittelsystem und der Oberfläche der Glasfaser reagieren kann, und dass die Wickel oder Knäuel bei einer Temperatur von 130° C derart getrocknet werden, dass eine Vernetzung des Klebemittelsystems stattfindet.

2. Verfahren nach Anspruch 1, dadurch gekennzeichnet, dass das Aminoplastharz das Melamin/Formaldehyd ist.

3. Verfahren nach Anspruch 2, dadurch gekennzeichnet, dass das Melamin/Formaldehyd teilweise veräthert ist.

4. Verfahren nach einem der Ansprüche 1 bis 3, dadurch gekennzeichnet, dass das Aminosilan γ-Aminopropyltriäthoxisilan ist.

5. Verfahren nach einem der Ansprüche 1 bis 4, dadurch gekennzeichnet, dass das Klebemittelsystem wenigstens zwei Acrylverbindungen enthält, von denen eine ein guter Filmbildner ist.

6. Verfahren nach einem der Ansprüche 1 bis 5, dadurch gekennzeichnet, dass die Schmälzezusammensetzung im wesentlichen besteht aus:
— 4 bis 15 Gew.-% einer Polyacrylamidlösung,
— 1,5 bis 6 Gew.-% einer Melamin/Formaldehyd-Lösung,
— 4 bis 15 Gew.-% einer Emulsion eines Copolymeren von Vinylacetat und von N-Methanolacrylamid,
— 0,01 Gew.-% eines Aminosilans,
— 0 bis 1 Gew.-% eines N-Methanolacrlyamidmonomeren,
— 0 bis 1 Gew.-% eines hydroskopischen Salzes wie zu 100% in deionisiertem Wasser gelöstes Lithiumchlorid.

7. Verfahren nach einem der Ansprüche 1 bis 6, dadurch gekennzeichnet, dass die Schmälzezusammensetzung ferner kristallisierbare Essigsäure enthält.

8. Verfahren nach einem der Ansprüche 1 bis 7, dadurch gekennzeichnet, dass die Schmälzezusammensetzung freies Formaldehyd enthält.

9. Verfahren nach einem der Ansprüche 1 bis 8, dadurch gekennzeichnet, dass die Schmälzezusammensetzung im wesentlichen besteht aus:
— 10 Gew.-% einer Polyacrylamidlösung,
— 4 Gew.-% einer leicht verätherten Melamin/Formaldehyd-Lösung,
— 10 Gew.-% einer Emulsion eines Copolymeren von Vinylacetat und von N-Methanolacrylamid,
— 0,3 Gew.-% von reinem γ-Aminopropyltriäthoxisilan,
— 0,3 Gew.-% Lithiumchlorid, zu 100% in deionisiertem Wasser gelöst.

10. Verfahren nach Anspruch 9, dadurch gekennzeichnet, dass die Schmälzezusammensetzung ferner 0,2 Gew.-% N-Methanolacrylamidmonomeres enthält.

11. Geschmälzte Glasfaser, welche nach einem Verfahren gemäss einem der Ansprüche 1 bis 10 hergestellt ist.

12. Geschmälzte Glasfaser nach Anspruch 11, dadurch gekennzeichnet, dass das Gewicht der Schmälze auf der Glasfaser etwa 0,5 bis 3% des Gesamtgewichtes der geschmälzten und getrockneten Faser beträgt.

13. Geschmälzte Glasfaser nach einem der Ansprüche 11 oder 12, dadurch gekennzeichnet, dass die Schmälze der Faser unter 50% und vorzugsweise unter 30% in Benzol lösbar ist.

14. Durch Glasfasern verstärker Kunststoff, dadurch gekennzeichnet, dass der Kunststoff Glasfasern nach einem der Ansprüche 11 bis 13 enthält.

15. Verwendung von nach einem der Ansprüche 11 bis 13 geschmälzten Glasfasern zur Verstärkung von vorimprägnierten SMC *(Sheet Molding Compound)*-Tafeln oder von Strängen.

16. Vorimprägnierte SMC-Tafeln oder Stränge, enthaltend geschmälzte Glasfasern nach einem der Ansprüche 11 bis 13.

## Claims

1. Process for the manufacture of coated continuous glass fibres, comprising the following series of operations:
— filaments of molten glass are drawn mechanically at a high velocity,
— the continuous filaments are coated with the aid of an aqueous sizing composition,
— the glass filaments are assembled during the course of drawing into threads which are rolled up into cakes, dried, then assembled into cores of layered threads in the form of small balls, or assembled directly into cores in the form of small balls and dried, characterised in that the filaments are coated by means of an aqueous sizing composition comprising a system of cross-linkable adhesives including at least one compound having a plurality of N-methylol and/or $N-CH_2OR$ functions with R being an alkyl radical, this compound being chosen from the group of etherified or non-etherified formaldehyde aminoplasts, comprising melamine/formaldehyd, urea/formaldehyde, amide/formaldehyde, which are cross-linkable with at least one modified or unmodified acrylic polymer, and at least one aminosilane capable of reacting with the system of adhesives and the glass surface of the fibre, and in that the cakes or small balls are dried at a temperature of the order of 130° C so as to bring about cross-linking of the system of adhesives.

2. Process according to Claim 1, characterised in that the aminoplast resin is melamine/formaldehyde.

3. Process according to Claim 2, characterised in that the melamine/formaldehyde is partially etherified.

4. Process according to any one of Claims 1 to 3, characterised in that the aminosilane is γ-aminopropyltriethoxysilane.

5. Process according to any one of Claims 1 to 4, characterised in that the system of adhesives contains at least two acrylic compounds of which one is a good film-former.

6. Process according to any one of Claims 1 to 5, characterised in that the sizing composition comprises essentially and in the following proportions:
— 4 to 15% by weight of a solution of polyacrylamide,
— 1.5 to 6% by weight of a solution of melamine/formaldehyde,
— 4 to 15% by weight of an emulsion of a copolymer of vinyl acetate and N-methylolacrylamide,
— 0.01 by weight of an aminosilane,
— 0 to 1% by weight of N-methylolacrylamide monomer,
— 0 to 1% by weight of a hydroscopic salt such as lithium chlorid,
the balance to 100% being de-ionised water.

7. Process according to any one of Claims 1 to 6, characterised in that the sizing composition also contains crystallisable acetic acid.

8. Process according to any one of Claims 1 to 7, characterised in that the sizing composition contains free formaldehyde.

9. Process according to any one of Claims 1 to 8, characterised in that the sizing composition contains essentially:
— 10% by weight of a solution of polyacrylamide,
— 4% by weight of a slightly etherified melamine/formaldehyde solution,
— 10% by weight of an emulsion of a vinyl acetate/N-methylolacrylamide copolymer,
— 0.3 by weight of pure γ-aminopropyltriethoxysilane,
— 0.3% by weight of lithium chloride,
the balance to 100% being de-ionised water.

10. Process according to Claim 9, characterised in that the sizing composition also contains 0.2% by weight of N-methylolacrylamide monomer.

11. Sized glass fibre obtained by carrying out the process according to any one of Claims 1 to 10.

12. Sized glass fibre according to Claim 11, characterised in that the weight of size on the fibre represents about 0.5 to 3% of the total weight of the sized and dried fibre.

13. Sized glass fibre according to any one of Claims 11 or 12, characterised in that the size that it carries is less than 50% and preferably less than 30% soluble in benzene.

14. A composite plastics material reinforced with glass fibres, characterised in that it contains glass fibres according to Claims 11 to 13.

15. Application of sized glass fibres according to any one of Claims 11 to 13 in the reinforcement of pre-pregs in the form of SMC (sheet moulding compound) foils or doughs.

16. SMC pre-pregs or in the form of doughs including sized glass fibres according to any one of Claims 11 to 13.